Europäisches Patentamt

European Patent Office

Office européen des brevets

(11) Veröffentlichungsnummer: **0 267 897**
**B1**

(12) **EUROPÄISCHE PATENTSCHRIFT**

(45) Veröffentlichungstag der Patentschrift:
16.08.89

(51) Int. Cl.⁴: **B 01 D 46/24, C 10 K 1/02**

(21) Anmeldenummer: **86903228.4**

(22) Anmeldetag: **30.05.86**

(86) Internationale Anmeldenummer:
**PCT/DE 86/00225**

(87) Internationale Veröffentlichungsnummer:
**WO 87/07181 (03.12.87 Gazette 87/27)**

(54) VORRICHTUNG ZUM FILTRIEREN VON GASEN.

| | |
|---|---|
| (43) Veröffentlichungstag der Anmeldung:<br>**25.05.88 Patentblatt 88/21** | (73) Patentinhaber: **Schumacher GmbH & Co. KG, Zur Flügelau 70, D-7180 Crailsheim (DE)** |
| (45) Bekanntmachung des Hinweises auf die Patenterteilung:<br>**16.08.89 Patentblatt 89/33** | (72) Erfinder: **REINHARDT, Erich, Karl, Hindenburgstrasse 88, D-7120 Bietigheim-Bissingen (DE)** |
| (84) Benannte Vertragsstaaten:<br>**AT BE CH DE FR GB IT LI LU NL SE** | (74) Vertreter: **Hoeger, Stellrecht & Partner, Uhlandstrasse 14 c, D-7000 Stuttgart 1 (DE)** |
| (56) Entgegenhaltungen:<br>**FR-A- 2 269 177**<br>**LU-A- 54 396**<br>**US-A- 2 769 506** | |

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Filtrieren von Gasen mit einer einen Behälter in zwei Teilräume trennenden Lochplatte, in welche sich mit einem an ihrer Oberseite angeordneten Ringflansch abstützende Filterelemente eingehängt sind, bei der das zu filtrierende Gas aus dem unterhalb der Lochplatte liegenden Teilraum von aussen nach innen durch die topf- oder kerzenförmige Filterelemente in den oberen Teilraum gelangt.

Derartige Filterelemente sind beispielsweise bekannt aus

Proceedings of the Filtech Conference, London, Sept. 27-29, 1983, Seiten 384-395

Filtration & Separation, July/August 1983, Seiten 297/298.

Bei derartigen Vorrichtungen steht das zu filtrierende Gas in dem unter der Lochplatte liegenden Teilraum unter einem erheblichen Druck, d. h. auf die in die Lochplatte eingehängten Filterelemente wird eine nach oben gerichtete Kraft ausgeübt, die bestrebt ist, die Filterelemente nach oben aus der Lochplatte herauszuschieben.

Um dies zu verhindern, sind komplizierte Haltevorrichtungen für die Filterelemente notwendig. Dabei ist zu berücksichtigen, dass bewegte Teile, wie Federn etc., aufgrund der im Bereich der Filter herrschenden hohen Temperaturen nicht mehr eingesetzt werden können. Ausserdem ergeben sich Schwierigkeiten mit solchen Befestigungen, wenn im Betrieb bei einzelnen Filterelementen unvorhergesehene Druckstösse auftreten, da diese die an der Lochplatte fixierten Filterelemente zerstören können.

Es ist Aufgabe der Erfindung, eine Vorrichtung der eingangs beschriebenen Art derart zu verbessern, dass einerseits eine sichere Festlegung der Filterelemente in der Lochplatte erreichbar ist, die auch bei den im Betrieb herrschenden extremen Bedingungen zuverlässig arbeitet, und dass andererseits eine Zerstörung von einzelnen Filterelementen bei lokal auftretenden Druckspitzen zuverlässig vermieden wird.

Diese Aufgabe wird bei einer Vorrichtung der eingangs beschriebenen Art erfindungsgemäss dadurch gelöst, dass auf die Filterelemente Gewichte aufgelegt sind, die einen durchgehenden, den Innenraum der Filterelemente mit dem oberen Teilraum verbindenden Kanal aufweisen.

Die Auflage dieser Gewichte auf die Filterelemente drückt diese so fest gegen die sie aufnehmenden Lochplatten, dass sie bei den normalerweise von dem zu filtrierenden Gas auf sie ausgeübten Kräften nicht aus der Lochplatte herausgehoben werden, d. h. die Filterelemente bleiben im Dichtsitz in der Lochplatte fixiert. Diese Dichtung kann durch Zwischenlage von Dichtungen zwischen Filterelement und Lochplatte noch verbessert werden.

Wenn sich jedoch eine lokale Druckspitze aufbaut, die auf einzelne Filterelemente überdurchschnittlich grosse, nach oben gerichtete Kräfte ausübt, können die Filterelemente einzeln gegen die Kraft der aufgelegten Gewichte angehoben werden, so dass die Filterelemente gegenüber der Lochplatte nicht mehr abdichten. Auf diese Weise kann die Lokale Druckspitze abgebaut werden, ohne dass die Filterelemente beschädigt werden. Durch die Verwendung einzelner auf die Filterelemente aufgelegter Gewichte kann dabei jedes einzelne Filterelement in der grossen Zahl der in der Lochplatte eingehängten Filterelemente in dieser Weise angehoben werden, so dass sowohl räumlich sehr begrenzte als auch räumlich ausgedehnte Druckspitzen durch Anheben der betroffenen Filterelemente abgebaut werden können, ohne dass die übrigen Filterelemente in ihrem Dichtsitz beeinflusst werden.

Durch das Vorsehen eines durchgehenden Kanals in den Gewichten wird das Ausströmen des gereinigten Gases aus dem Filterelement in den oberen Teilraum nicht behindert. Ebensowenig behindert wird dadurch das Einblasen von kurzen Gasstössen in das Innere der Filterelemente, das üblicherweise zum Abreinigen der Filterelemente durchgeführt wird. Diese Gasstossabreinigung kann in der herkömmlichen Weise über Rohre erfolgen, die oberhalb des Kanalauslasses in den aufgelegten Gewichten enden. Die Gewichte leiten dann den Gasstoss aus diesen Rohren in das Innere der abzureinigenden Filterelemente.

Ein wesentlicher Vorteil der aufgelegten Gewichte ist auch darin zu sehen, dass durch diese Gewichte die gesamte Lochplatte belastet wird. Diese Belastung wirkt den durch das zu filtrierende Gas auf die Lochplatte ausgeübten grossen Druckkräften wirksam entgegen, so dass auch Lochplatten geringerer Stärke Verwendung finden können.

Bei einer bevorzugten Ausführungsform ist vorgesehen, dass die Löcher in der Lochplatte auf den Kreuzungspunkten von äquidistanten, sich unter 120° schneidenden Geradenscharen liegen und dass die Gewichte die Form von regelmässigen Sechsecken aufweisen, wobei benachbarten Filterelementen zugeordnete Gewichte flächig aneinanderliegen. Es ist durch diese spezielle Anordnung möglich, die Gewichte flächendeckend auf der Lochplatte zu verteilen, wobei alle Gewichte gleich ausgebildet sind.

Es kann auch vorgesehen sein, dass jedes Gewicht auf mehreren Filterelementen aufliegt. Dabei ist es vorteilhaft, wenn sich die Kanäle von auf mehreren Filterelementen aufliegenden Gewichten im Innern der Gewichte in eine Anzahl von jeweils mit einem Filterelement in Verbindung stehenden Einzelkanälen verzweigen. Diese Einzelkanäle sammeln einerseits das aus den einzelnen Filterelementen ausströmende, gereinigte Gas und führen es durch einen gemeinsamen Auslass in den oberen Teilraum, andererseits verteilt der sich verzweigende Kanal in dem Gewicht auch die Abreinigungsgasstösse gleichmässig in die darunterliegenden Filterelemente.

Besonders vorteilhaft ist es dabei, wenn ein Gewicht auf jeweils drei Filterelementen aufliegt, die nicht alle auf einer Geraden liegen. Damit ergibt sich eine statisch bestimmte Lage des aufgelegten Gewichtes. Wenn ein Filterelement aufgrund einer lokalen Druckspitze angehoben wird, bleibt das Gewicht trotzdem auf den beiden anderen Filterelementen liegen, so dass diese weiter sicher im Dichtsitz gehalten sind. Dasselbe gilt, wenn zwei Filterelemente angehoben werden, die Gewichte halten das dritte Filterelement trotzdem sicher in der Lochplatte.

Bei einer bevorzugten Ausführungsform ist vorgesehen, dass die Löcher in der Lochplatte auf den Kreuzungspunkten von äquidistanten, sich unter 120° schneidenden Geradenscharen liegen und dass die Gewichte im Querschnitt die Form von drei flächig aneinanderliegenden, regelmässigen Sechsecken aufweisen, deren Mittelpunkte auf einem gleichseitigen Dreieck liegen. Es ist dabei günstig, wenn die Gewichte geringfügig zurückgesetzte Seitenwände aufweisen, so dass beim Auflegen benachbarter Gewichte auf die Lochplatte zwischen diesen ein kleiner Spalt entsteht. Wenn ein oder zwei Filterelemente durch eine lokale Druckspitze angehoben werden, kann das Gewicht durch diesen Spalt gegenüber den benachbarten Gewichten geringfügig verkippt werden, so dass die Aufwärtsbewegung der Filterelemente nicht behindert wird.

Es ist besonders günstig, wenn die Gewichte auf der Lochplatte um eine zentrale und verschlossene Fläche in Kreisen auf die Filterelemente aufgelegt sind. Die zentrale und verschlossene Fläche kann dabei eine Umlenkfläche für das zu filtrierende Gas sein, das von unten gegen die geschlossene Fläche geleitet wird und erst nach der Umlenkung an der verschlossenen Fläche auf die Mantelflächen der Filterelemente auftrifft.

Ausserdem lassen sich bei dieser Anordnung die Gewichte aufgrund ihrer speziellen Form besonders günstig auflegen, wobei an der Aussenseite eine beliebige Anzahl von Gewichten angelegt werden können.

Vorzugsweise bestehen die Gewichte aus Stahl oder aus Keramik.

Die nachfolgende Beschreibung einer bevorzugten Ausführungsform der Erfindung dient im Zusammenhang mit der Zeichnung der näheren Erläuterung. Es zeigen:

Fig. 1 eine Draufsicht auf eine Lochplatte mit aufgelegten Gewichten;

Fig. 2 eine Teillängsschnittansicht durch eine Lochplatte, den Oberteil einiger Filterelemente und ein aufgelegtes Gewicht;

Fig. 3 eine Draufsicht auf eine Lochplatte mit drei aufgelegten Gewichten und einem daraufliegenden Strömungsverteilerelement, und

Fig. 4 eine Schnittansicht längs Linie 4-4 in Figur 3.

Die in der Zeichnung dargestellte Vorrichtung zum Filtrieren von Gasen weist eine horizontale Lochplatte 1 auf, die einen in der Zeichnung nicht dargestellten Behälter in einen unterhalb der Lochplatte 1 liegenden unteren Teilraum und in einen oberhalb der Lochplatte 1 liegenden oberen Teilraum unterteilt.

In dem dargestellten Ausführungsbeispiel befinden sich in der Lochplatte eine Vielzahl von Löchern 2, die auf den Kreuzungspunkten von sich unter 120° schneidenden, äquidistanten Geradenscharen liegen. In jedes dieser Löcher 2 ist ein topf- oder kerzenförmiges Filterelement 3 eingehängt, welches sich mit einem Ringflansch 4 an seinem oberen Ende auf der Oberseite der Lochplatte 1 abstützt. Zwischen Ringflansch 4 und Lochplatte 1 kann eine in der Zeichnung nicht dargestellte Ringdichtung eingelegt sein. Die Filterelemente 3 sind an ihrer Unterseite verschlossen und bestehen aus einem filtrierenden Material, beispielsweise aus einer Filtrierkeramik.

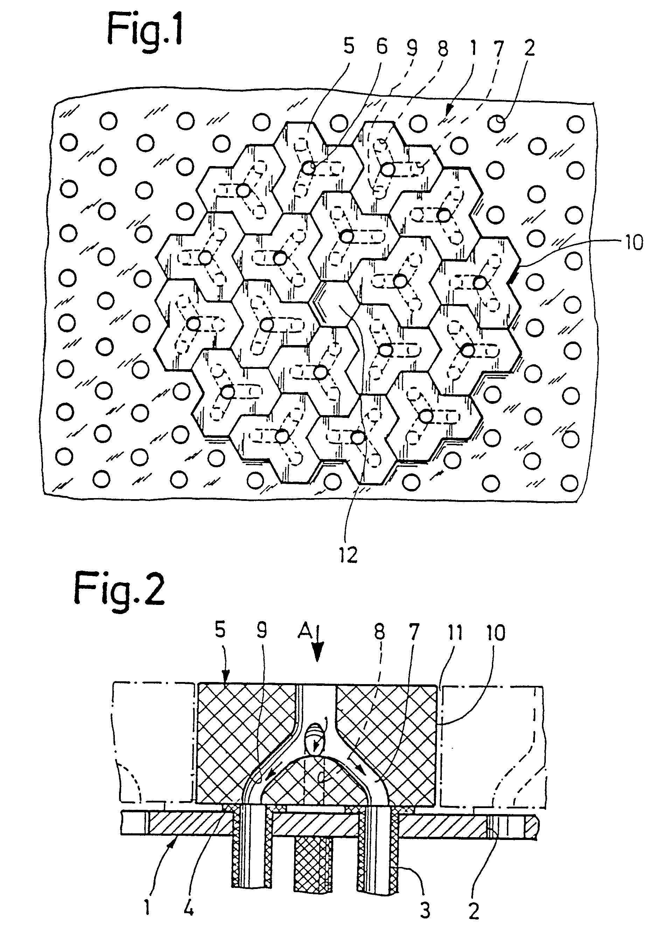

Auf jeweils drei Filterelemente, die in zueinander benachbarten, auf den Eckpunkten eines gleichseitigen Dreiecks liegenden Löchern angeordnet sind, ist ein Gewicht 5 aufgesetzt, welches im Querschnitt die Form von drei aneinanderliegenden, regelmässigen Sechsecken aufweist, deren Mittelpunkte oberhalb der darunterliegenden Löcher liegen, also ebenfalls auf den Eckpunkten eines gleichseitigen Dreiecks. Diese Gewichte 5 haben senkrechte Seitenwände, sie bestehen beispielsweise aus Stahl oder aus Keramik. Sie sind mit ihrer ebenen Unterseite auf die Ringflansche 4 von jeweils drei Filterelementen aufgelegt und drücken diese dadurch dichtend gegen die Lochplatte 1 (Figur 2).

Im Inneren jedes Gewichtes befindet sich ein durchgehender Kanal 6, der an der Oberseite der Gewichte im Mittelpunkt der Gewichte eintritt und sich im Inneren der Gewichte in drei Einzelkanäle 7, 8, 9 aufzweigt, von denen jeder in den Innenraum eines Filterelementes 3 einmündet.

Die Seitenwände 10 der Gewichte 5 sind gegenüber der Form, die sich bei der Verwendung regelmässiger Sechsecke ergeben würde, geringfügig zurückgesetzt, so dass zwischen den Seitenwänden 10 benachbarter Gewichte 5 ein schmaler Spalt 11 verbleibt, der den Gewichten eine geringfügige Verkippung ermöglicht.

Die Löcher 2 in der Lochplatte 1 sind so angeordnet, dass eine zentrale geschlossene Fläche 12 verbleibt, die entweder die Form eines regelmässigen Sechseckes hat mit einer Seitenlänge, die mit den Seitenlängen der Sechsecke des Gewichts 5 übereinstimmt, oder eine Fläche, die sich daraus ergibt, dass man um ein solches Sechseck geschlossene Flächenbereiche anordnet, die in ihrer Querschnittsform der der Gewichte 5 entsprechen.

Um diese geschlossene Fläche 12 werden die Gewichte 5 in konzentrischen Kreisen angeordnet, wobei insgesamt eine flächendeckende Abdeckung der Lochplatte erreicht werden kann. In Figur 1 sind lediglich ein innerer Kreis und ein äusserer Kreis dargestellt, wobei zur besseren Verdeutlichung in den freien Löchern keine Filterelemente dargestellt sind. Nach aussen lässt sich dieses Muster beliebig fortsetzen, so dass auch Lochplatten mit einer sehr grossen Anzahl von eingehängten Filterelementen vollständig abgedeckt werden können.

Im Betrieb strömt ein zu reinigendes Gas im unteren Teilraum von aussen nach innen in die Filterelemente und aus deren Innenraum zunächst durch die Einzelkanäle und dann durch den gemeinsamen Kanal in den oberen Teilraum, aus dem das gereinigte Gas in nicht dargestellter Weise abtransportiert wird.

Eine Reinigung der Filterelemente ist dadurch möglich, dass in Richtung des Pfeiles A in Figur 2 ein kurzer Gasstoss in den Kanal 6 eingeleitet wird, der sich über die Einzelkanäle 7, 8 und 9 gleichmässig in die einzelnen, von einem Gewicht abgedeckten Filterelemente verteilt, so dass die von einem Gewicht jeweils abgedeckten Filterelemente gemeinsam abgereinigt werden.

Beim normalen Betrieb werden die Filterelemente dichtend an die Lochplatte angedrückt, beim Auftreten von lokalen Druckspitzen können die Filterelemente jedoch von der Lochplatte angehoben werden, wobei die Gewichte leicht verkippt werden, wenn nicht alle drei Filterelemente gleichmässig angehoben werden. Dadurch können die lokalen Druckspitzen abgebaut werden, ohne dass eine Beschädigung der Filterelemente zu befürchten ist. Sobald die lokale Druckspitze abgebaut ist, werden die Filterelemente sofort wieder dichtend an die Lochplatte gedrückt.

Die Verwendung von Einzelgewichten ermöglicht in einfachster Weise ein Auswechseln von Filterelementen, es genügt dazu, das Gewicht nach oben abzunehmen, und dann können die Filterelemente aus den jeweiligen Löchern herausgezogen und durch neue ersetzt werden. Die Gewichte werden durch die jeweils benachbarten Gewichte auch in ihrer Position über den ihnen zugeordneten Filterelementen sicher gehalten, d. h. es ist nicht notwendig, eine spezielle Lagefixierung für die einzelnen Gewichte vorzusehen.

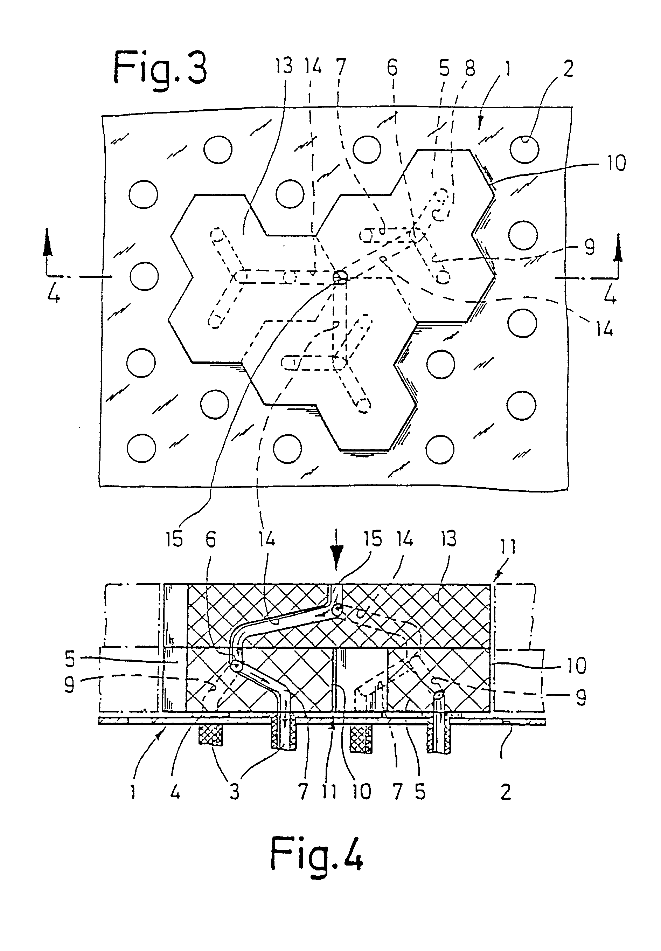

In den Figuren 3 und 4 ist ein abgewandeltes Ausführungsbeispiel dargestellt, bei dem auf die Lage der Gewichte 5 eine zweite Lage von Strömungsverteilerelementen 13 aufgelegt ist. Diese Strömungsverteilerelemente 13 überdecken mehrere Gewichte 5, im dargestellten Ausführungsbeispiel drei Gewichte 5. Jedes Strömungsverteilerelement weist einen sich verzweigenden Kanal auf, der an der Oberseite des Strömungsverteilerelementes mit einem Kanal 15 beginnt, der sich in mehrere, an der Unterseite austretende Kanäle 14 verzweigt. Die Austrittsstellen der Kanäle 14 sind mit den Eintrittsstellen der Kanäle 6 in den darunterliegenden Gewichten 5 ausgerichtet, so dass über das Strömungsverteilerelement 13 die an der Oberseite aus den Gewichten austretenden Kanäle von drei Gewichten zu einem einzigen Kanal 15 zusammengeführt sind, der an der Oberseite des Strömungsverteilerelementes 13 austritt. Dadurch wird die Reinigung der Filterelemente in der oben beschriebenen Weise durch Rückstoss weiter erleichtert, da mit einem Rückstoss oberhalb eines Strömungsverteilerelementes eine grössere Anzahl von Filterelementen gereinigt werden können, im dargestellten Ausführungsbeispiel neun Filterelemente. Dadurch wird die Abreinigungsvorrichtung konstruktiv vereinfacht, da für eine grössere Anzahl von Filterelementen nur eine Abreinigungsvorrichtung notwendig ist.

Die Strömungsverteilerelemente können aus einem wesentlich leichteren Werkstoff sein als die Gewichte 5, beispielsweise aus einem leichteren Keramikmaterial. Günstig ist es, wenn die Strömungsverteilerelemente formschlüssig aneinander anschliessen, so dass die Gewichte durch eine durchgehende obere Lage abgedeckt werden.

## Patentansprüche

1. Vorrichtung zum Filtrieren von Gasen mit einer einen Behälter in zwei Teilräume trennenden Lochplatte, in welche sich mit einem an ihrer Oberseite angeordneten Ringflansch abstützende Filterelemente eingehängt sind, bei der das zu filtrierende Gas aus dem unterhalb der Lochplatte liegenden Teilraum von aussen nach innen durch die topf- oder kerzenförmigen Filterelemente in den oberen Teilraum gelangt, dadurch gekennzeichnet, dass auf die Filterelemente (3) Gewichte (5) aufgelegt sind, die einen durchgehenden, den Innenraum der Filterelemente (3) mit dem oberen Teilraum verbindenden Kanal (6) aufweisen.

2. Vorrichtung nach Anspruch 1, dadurch gekennzeichnet, dass die Löcher (2) in der Lochplatte (1) auf den Kreuzungspunkten von äquidistanten, sich unter 120° schneidenden Geradenscharen liegen und dass die Gewichte die Form von regelmässigen Sechsecken aufweisen, wobei benachbarten Löchern (2) zugeordnete Gewichte flächig aneinanderliegen.

3. Vorrichtung nach Anspruch 1, dadurch gekennzeichnet, dass jedes Gewicht (5) auf mehreren Filterelementen (3) aufliegt.

4. Vorrichtung nach Anspruch 3, dadurch gekennzeichnet, dass sich die Kanäle (6) von auf mehreren Filterelementen (3) aufliegenden Gewichten (5) im Innern der Gewichte (5) in eine Anzahl von jeweils mit einem Filterelement (3) in Verbindung stehenden Einzelkanälen (7, 8, 9) verzweigen.

5. Vorrichtung nach Anspruch 3 oder 4, dadurch gekennzeichnet, dass ein Gewicht (5) auf jeweils drei Filterelementen (3) aufliegt, die nicht alle auf einer Geraden liegen.

6. Vorrichtung nach Anspruch 5, dadurch gekennzeichnet, dass die Löcher (2) in der Lochplatte (1) auf den Kreuzungspunkten von äquidistanten, sich unter 120° schneidenden Geradenscharen liegen und dass die Gewichte (5) im Querschnitt die Form von drei flächig aneinanderliegenden, regelmässigen Sechsecken aufweisen, deren Mittelpunkte auf einem gleichseitigen Dreieck liegen.

7. Vorrichtung nach Anspruch 6, dadurch gekennzeichnet, dass die Gewichte (5) geringfügig zurückgesetzte Seitenwände (10) aufweisen, so dass beim Auflegen benachbarter Gewichte (5) auf die Lochplatte (1) zwischen diesen ein kleiner Spalt (11) entsteht.

8. Vorrichtung nach einem der Ansprüche 6 oder 7, dadurch gekennzeichnet, dass die Gewichte (5) auf der Lochplatte (1) um eine zentrale und verschlossene Fläche (12) in Kreisen auf die Filterelemente (3) aufgelegt sind.

9. Vorrichtung nach einem der voranstehenden Ansprüche, dadurch gekennzeichnet, dass die Gewichte (5) aus Stahl bestehen.

10. Vorrichtung nach einem der Ansprüche 1 bis 8, dadurch gekennzeichnet, dass die Gewichte (5) aus Keramik bestehen.

11. Vorrichtung nach einem der Ansprüche 4 bis 10, dadurch gekennzeichnet, dass auf den Gewichten (5) eine weitere Lage aus mehrere Gewichte (5) überdeckenden Strömungsverteilerelementen (13) angeordnet ist, die sich verzweigende Kanäle aufweisen, wobei die an der Unterseite austretenden Kanäle (14) mit den Kanälen (6) mehrerer darunterliegender Gewichte (5) in Verbindung stehen, während bei jedem Strömungsverteilerelement (13) an der Oberseite nur ein Kanal (15) austritt.

## Claims

1. Apparatus for filtering gases comprising a perforated plate separating a container into two compartments and filter elements suspended from said plate, said filter elements being supported by an annular flange arranged on their upper side, wherein the gas to be filtered travels from the compartment located beneath the perforated plate from the outside to the inside through the pot-shaped or candle-shaped filter elements into the upper compartment, characterized in that weights (5) comprising a continuous channel (6) connecting the interior of the filter elements (3) with the upper compartment are placed on the filter elements (3).

2. Apparatus as defined in claim 1, characterized in that the holes (2) in the perforated plate (1) are located on the points of intersection of equidistant bands of straight lines intersecting at 120°, and that the weights have the shape of regular hexagons, weights associated with neighbouring holes (2) lying side by side in surface contact with one another.

3. Apparatus as defined in claim 1, characterized in that each weight (5) rests on a plurality of filter elements (3).

4. Apparatus as defined in claim 3, characterized in that the channels (6) of weights (5) resting on a plurality of filter elements (3) branch in the interior of the weights (5) into a number of individual channels (7, 8, 9) each communicating with a filter element (3).

5. Apparatus as defined in claims 3 or 4, characterized in that one weight (5) rests on three filter elements (3) which do not all lie on a straight line.

6. Apparatus as defined in claim 5, characterized in that the holes (2) in the perforated plate (1) are located on the points of intersection of equidistant bands of straight lines intersecting at 120°, and that the weights (5) have in cross section the shape of three regular hexagons arranged side by side in surface contact with one another, their midpoints being located on an equilateral triangle.

7. Apparatus as defined in claim 6, characterized in that the weights (5) have side walls (10) which are slightly set back so that a small gap (11) results between neighbouring weights (5) when these are placed on the perforated plate (1).

8. Apparatus as defined in either of claims 6 or 7, characterized in that the weights (5) on the perforated plate (1) are placed in circles on the filter elements (3) about a central and closed area (12).

9. Apparatus as defined in any of the preceding claims, characterized in that the weights (5) consist of steel.

10. Apparatus as defined in any of claims 1 to 8, characterized in that the weights (5) consist of a ceramic material.

11. Apparatus as defined in any of claims 4 to 10, characterized in that a further layer of flow distributor elements (13) covering a plurality of weights (5) and comprising branching channels is arranged on the weights (5), the channels (14) exiting on the underside communicating with the channels (6) of a plurality of weights (5) located thereunder whereas only one channel (15) exits on the upper side in each flow distributor element (13).

## Revendications

1. Dispositif pour filtrer des gaz, comportant une plaque perforée qui partage un récipient en deux espaces partiels et dans laquelle sont suspendus des éléments filtrants s'appuyant par une bride annulaire sur le dessus de la plaque perforée, dispositif dans lequel le gaz à filtrer parvient depuis l'espace partiel situé sous la plaque jusque dans l'espace partiel supérieur en traversant les éléments filtrants, en forme de pots ou de bougies, de l'extérieur vers l'intérieur, caractérisé en ce que les éléments filtrants (3) sont chargés par des poids (5) qui sont posés sur eux et sont pourvus chacun d'un canal (6) traversant qui relie l'espace intérieur des éléments filtrants (3) à l'espace partiel supérieur.

2. Dispositif selon la revendication 1, caractérisé en ce que les trous (2) de la plaque perforée (1) sont situés sur les points de croisement de groupes de droites équidistantes qui se coupent sous 120° et que les poids ont la forme d'hexagones réguliers, avec application les uns contre les autres, par des surfaces, de poids coordonnés à des trous (2) voisins.

3. Dispositif selon la revendication 1, caractérisé en ce que chaque poids (5) repose sur plusieurs éléments filtrants (3).

4. Dispositif selon la revendication 3, caractérisé en ce que les canaux (6) de poids (5) posés sur plusieurs éléments filtrants (3) se ramifient, à l'intérieur des poids (5), en un certain nombre de canaux élémentaires (7, 8, 9) communiquant chacun avec un élément filtrant (3).

5. Dispositif selon la revendication 3 ou 4, caractérisé en ce qu'un poids (5) repose chaque fois sur trois éléments filtrants (3) qui ne sont pas tous situés sur une droite.

6. Dispositif selon la revendication 5, caractérisé en ce que les trous (2) de la plaque perforée (1) sont situés sur les points de croisement de groupes de droites équidistantes qui se coupent sous 120° et que les poids (5) ont, en section droite, la forme de trois hexagones réguliers qui se rejoignent par des surfaces et dont les centres sont situés sur un triangle équilatéral.

7. Dispositif selon la revendication 6, caractérisé en ce que les poids (5) présentent des parois latérales (10) qui sont légèrement disposées en retrait, de sorte qu'une petite fente (11) se forme entre des poids (5) voisins lorsqu'ils sont posés sur la plaque perforée (1).

8. Dispositif selon la revendication 6 ou 7, caractérisé en ce que les poids (5) sont disposés sur les éléments filtrants (3) en cercles autour d'une surface centrale fermée (12) de la plaque perforée (1).

9. Dispositif selon une des revendications précédentes, caractérisé en ce que les poids (5) sont en acier.

10. Dispositif selon une des revendications 1 à 8, caractérisé en ce que les poids (5) sont en céramique.

11. Dispositif selon une des revendications 4 à 10, caractérisé en ce que les poids (5) sont surmontés d'une couche supplémentaire d'éléments distributeurs d'écoulement (13) recouvrant chacun plusieurs poids (5) et présentant des canaux qui se ramifient, dans une disposition où des canaux (14) sortant du côté inférieur des éléments distributeurs communiquent avec les canaux (6) de plusieurs poids (5) situés au-dessous, tandis qu'un seul canal (15) sort du côté supérieur de chaque élément distributeur d'écoulement (13).

# Fig.1

# Fig.2

# Fig.3

# Fig.4